# EUROPÄISCHE PATENTSCHRIFT

(11) **EP 0 936 986 B1**
(45) Veröffentlichungstag und Bekanntmachung des Hinweises auf die Patenterteilung: **23.02.2005**
(21) Anmeldenummer: 98949989.2
(22) Anmeldetag: 04.09.1998
(51) Int. Cl.: B62D 1/12, B62D 1/04, B62D 5/04

(54) **LENKVORRICHTUNG MIT MESSWERTGEBER**
STEERING DEVICE WITH MEASURING SENSOR
DISPOSITIF DE DIRECTION POURVU D'UN CAPTEUR DE MESURE

(30) Priorität: 06.09.1997 DE 19739104
(43) Veröffentlichungstag der Anmeldung: 25.08.1999
(60) Teilanmeldung: 02016974.4
(73) Patentinhaber: TRW Automotive Safety Systems GmbH, 63743 Aschaffenburg (DE)
(72) Erfinder: NIGRIN, Anke, D-97816 Lohr (DE); TSCHÖP, Winfried, D-97892 Kreuzwertheim (DE); KREUZER, Martin, D-63839 Kleinwallstadt (DE); BOSSLER, Hans-Jürgen, D-64839 Münster (DE); RANDAU, Ulrich, D-78048 Villingen-Schwenningen (DE)
(74) Vertreter: Degwert, Hartmut, Dipl.-Phys.
(86) Internationale Anmeldenummer: PCT/EP1998/005644
(87) Internationale Veröffentlichungsnummer: WO 1999/012792

(56) Entgegenhaltungen:
- EP-A- 0 377 097
- EP-A- 0 525 817
- DE-A- 2 704 519
- DE-A- 3 124 181
- DE-A- 4 314 573
- DE-A- 4 404 594
- DE-C- 4 328 564
- FR-A- 862 990
- FR-A- 1 271 764
- US-A- 3 415 550
- US-A- 3 714 844
- US-A- 4 485 371

## Beschreibung

Die Erfindung betrifft eine Lenkvorrichtung für ein Kraftfahrzeug mit einem Betätigungsorgan zur Einleitung der Lenkbewegung und einem Lenkgestänge zur Übertragung der Lenkbewegung auf die Räder.

Die bekannten Lenkvorrichtungen bestehen aus einem von Hand drehbaren Lenkrad, das von Anschlag zu Anschlag üblicherweise 3,5 bis 4,5 Umdrehungen gedreht werden kann und dessen Drehbewegung über ein Lenkgetriebe mechanisch direkt auf ein Lenkgestänge übertragen wird, das den Einschlag der gelenkten Räder bewirkt. Derartige Lenkvorrichtungen sind seit Anfang der Automobilentwicklung in verschiedener Form im Einsatz, wobei bei Bussen und Lastkraftwagen außer einem größeren Durchmesser des Lenkrades auch mehr Umdrehungen von Anschlag bis Anschlag vorgesehen werden können, um die Übersetzungsverhältnisse zugunsten geringeren Kraftaufwands zu verbessern. Außerdem sind insbesondere bei vorderradangetriebenen Personenkraftwagen pneumatische Lenkhilfen als sogenannte Servolenkungen weit verbreitet.

Die direkte mechanische Kopplung zwischen dem Lenkrad und den gelenkten Rädern hat allerdings auch verschiedene Nachteile. Zum einen läßt sich nicht gänzlich vermeiden, daß Fahrbahnunebenheiten trotz zwischengeschalteter Dämpfungseinrichtungen als mehr oder weniger starke Vibrationen bis in das Lenkrad durchschlagen, was nicht nur unkomfortabel ist, sondern bei längeren Fahrten auch zu einer stärkeren Ermüdung führt. Ein weiterer Nachteil besteht darin, daß man sich bei der Konzeption derartiger Lenkvorrichtungen von vornherein für ein bestimmtes Übersetzungsverhältnis entscheiden muß, bei dem der eine einen ungenügenden Fahrbahnkontakt moniert, während für den anderen das selbe Übersetzungsverhältnis noch zu kraftaufwendig ist. Außerdem können die unterschiedlichen Bedürfnisse bei Autobahn-Geradeausfahrt einerseits und beim Einparken andererseits bei den herkömmlichen Lenkvorrichtungen nicht oder nur mit beträchtlichem technischen Aufwand zufriedenstellend erfüllt werden.

Hinzu kommt, daß bei modernen Lenkrädern immer mehr Betätigungseinrichtungen so angeordnet werden, daß sie erreicht werden können, ohne daß die Hand vom Lenkrad genommen werden muß. Bei herkömmlichen Lenkvorrichtungen hängt die Zuverlässigkeit derartiger Betätigungen davon ab, daß die einzelnen Befehle sicher vom drehbaren Lenkrad auf feststehende Teile der Karosserie übertragen werden können. Auch hierfür gibt es zwar schon eine ganze Reihe bewährter technischer Lösungsmöglichkeiten, die jedoch alle einen Rest an Störanfälligkeit aufweisen und von denen viele bei einer deutlichen Erhöhung der am Lenkrad untergebrachten Betätigungseinrichtungen überlastet sind.

Aus der DE-A-31 24 181 ist eine Lenkvorrichtung für ein Kraftfahrzeug mit den Merkmalen der Oberbegriffe der Ansprüche 1, 4 und 9 bekannt.

Es besteht die Aufgabe, eine Lenkvorrichtung der eingangs genannten Art anzugeben, bei der die vorstehend genannten Nachteile nicht auftreten können, die leicht an die verschiedensten Anforderungen angepaßt werden kann und bei der am Betätigungsorgan ohne weiteres eine Mehrzahl von Hebeln und Tastern für die verschiedensten Zwecke angeordnet werden kann, ohne daß die Signalübertragung Schwierigkeiten bereitet.

Zur Lösung dieser Aufgabe wird eine Lenkvorrichtung gemäß Anspruch 1, 4 oder 9 vorgeschlagen.

Bei der erfindungsgemäßen Lenkvorrichtung wurde weiter der Begriff "Lenkrad" benutzt, obwohl das Betätigungsorgan nur noch um einen sehr kleinen Winkel drehbar ist. Im übrigen kann es aber noch weitgehend wie ein herkömmliches Lenkrad gestaltet werden. Wichtig ist die mechanische Entkopplung vom Lenkgestänge und die Übertragung der Lenkbefehle auf elektrischem oder elektronischem Wege. Dazu ist gemäß einem ersten Aspekt der Erfindung ein Meßwertgeber zur Erzeugung eines elektrischen Positionssignal vorgesehen, das einer elektrischen oder elektronischen Regeleinrichtung zugeleitet wird, die ihrerseits in Abhängigkeit von dem Positionssignal Ansteuerbefehle für einen Stellantrieb erzeugt, der das Lenkgestänge betätigt.

Die erfindungsgemäße Lenkvorrichtung hat den Vorteil, daß in dem nur noch wenig drehbaren "Lenkrad" in üblicher Weise ein Airbag sowie Betätigungs- und Anzeigevorrichtungen untergebracht werden können, ohne daß wie bei einem mehrfach um 360° drehbaren Lenkrad besondere Einrichtungen zur Übertragung der Betätigungs- bzw. Anzeigesignale von einem feststehenden auf ein um mehrere Umdrehungen bewegliches Bauteil bzw. umgekehrt vorgesehen werden muß.

Die erfindungsgemäße Lenkvorrichtung hat weiter den großen Vorteil, daß infolge der mechanischen Entkopplung auf sehr einfache Weise beliebige Übersetzungsverhältnisse realisiert werden könne, weil insoweit nur in die Software der elektronischen Regeleinrichtung eingegriffen werden muß. Außerdem ist es ohne weiteres möglich, für die Autobahn-Geradeausfahrt ein sehr direktes Übersetzungsverhältnis zu wählen und für den Einparkbetrieb den entgegengesetzten Auslegungsbereich vorzusehen.

Zweckmäßige Ausgestaltungen des Erfindungsgedankens sind in den Unteransprüchen beschrieben. Weitere Einzelheiten werden anhand der in den Figuren 1 bis 4 dargestellten Ausführungsbeispiele näher erläutert. Es zeigen:
- Fig. 1: eine Draufsicht auf eine erste Ausführungsform des "Lenkrades" für eine erfindungsgemäße Lenkvorrichtung
- Fig. 2: eine Draufsicht auf eine zweite Ausführungsform des "Lenkrades" für eine erfindungsgemäße Lenkvorrichtung
- Fig. 3: einen Teilschnitt durch ein Lenkrad der erfindungsgemäßen Lenkvorrichtung
- Fig. 4: eine Draufsicht auf eine weitere Ausführungsform eines "Lenkrades" der erfindungsgemäßen Lenkvorrichtung.

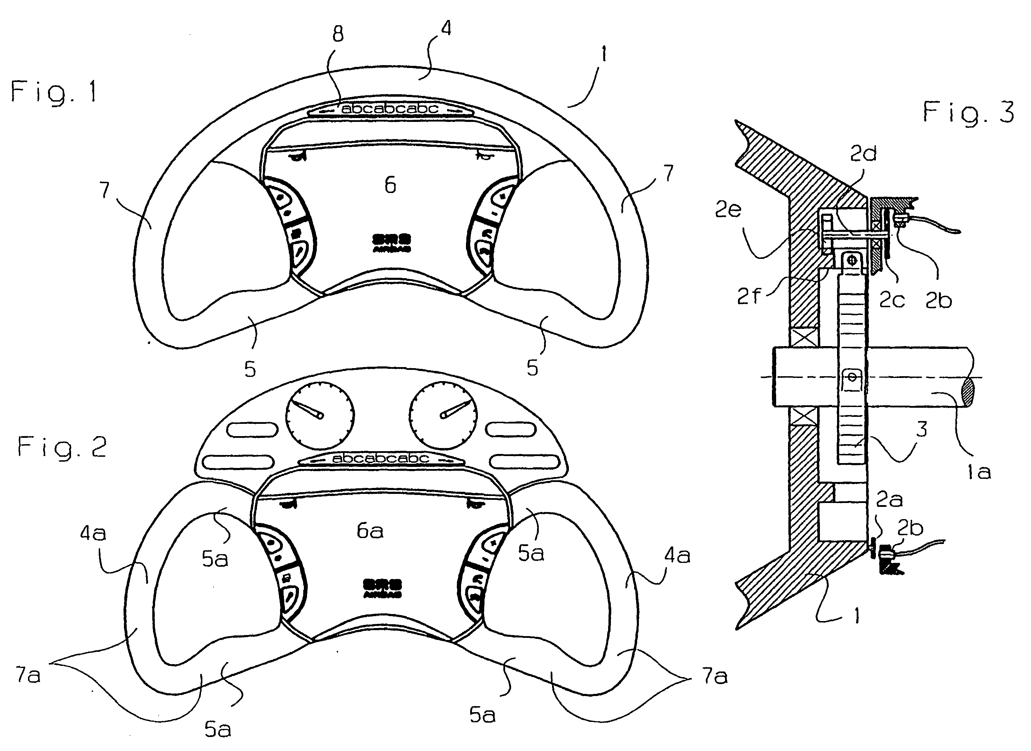

In Fig. 1 ist ein von der herkömmlichen Form abweichendes "Lenkrad" dargestellt, das nur noch aus einem etwa halbkreisförmigen Lenkradkranzteil 4 und zwei Lenkradspeichen 5 besteht, die außen mit den Enden des Lenkradkranzteils 4 verbunden sind. Am Lenkradkranz 4 sind zwei Griffbereiche 7 ausgebildet, die - anders als bei einem drehbaren Lenkrad - dauerhaft umfaßt werden können, weil nur ein kleiner Drehwinkel bis max. etwa ± 30 Winkelgrad vorgesehen ist. Im Zentralteil 6 des "Lenkrades" 1 kann in üblicher Weise ein Airbag untergebracht werden. Der obere Lenkradkranzteil 4 ist im mittleren Bereich 8 mit dem Zentralteil 6 verbunden. Im Zentralteil 6 können außerdem verschiedene Anzeige- und Betätigungseinrichtungen untergebracht werden.

Bei der Ausführungsform gemäß Fig. 2 besteht das "Lenkrad" 1 aus vier Speichen 5a und zwei kurzen Lenkradkranzteilen 4a, die endseitig mit den äußeren Enden der Speichen 5a verbunden sind und je einen mindestens handbreiten Griffbereich 7a bilden. Die Speichen 5a gehen von einem Zentralteil 6a des Lenkrades 1 aus, in dem wiederum ein Airbag untergebracht werden kann und an dem verschiedene Anzeige- und Betätigungsvorrichtungen angebracht sein können.

Gemäß Fig. 3 ist das "Lenkrad" 1 auf einer Welle 1a drehbar gelagert, wobei eine Rückstellfeder dafür sorgt, daß es selbsttätig seine Mittellage einnimmt. Der Meßwertgeber 2 kann aus einem sich mit dem "Lenkrad" 1 drehenden Strichcodeträger 2a bestehen, der im Zusammenwirken mit einer ortsfesten Leseeinrichtung das erforderliche Positionssignal erzeugt.

Der Meßwertgeber kann aber auch auf einer kleinen drehbaren Scheibe 2c mit Strichcode und einer ortsfesten Lesevorrichtung 2b bestehen, wobei die Scheibe 2c drehfest auf einer Welle 2d mit Zahnrad 2e angeordnet ist, dessen Zähne in einen sich mit dem "Lenkrad" 1 drehenden Zahnkranz 2f eingreifen. Auf diese Weise kann man Einfluß auf die Auflösung des Strichcodes nehmen.

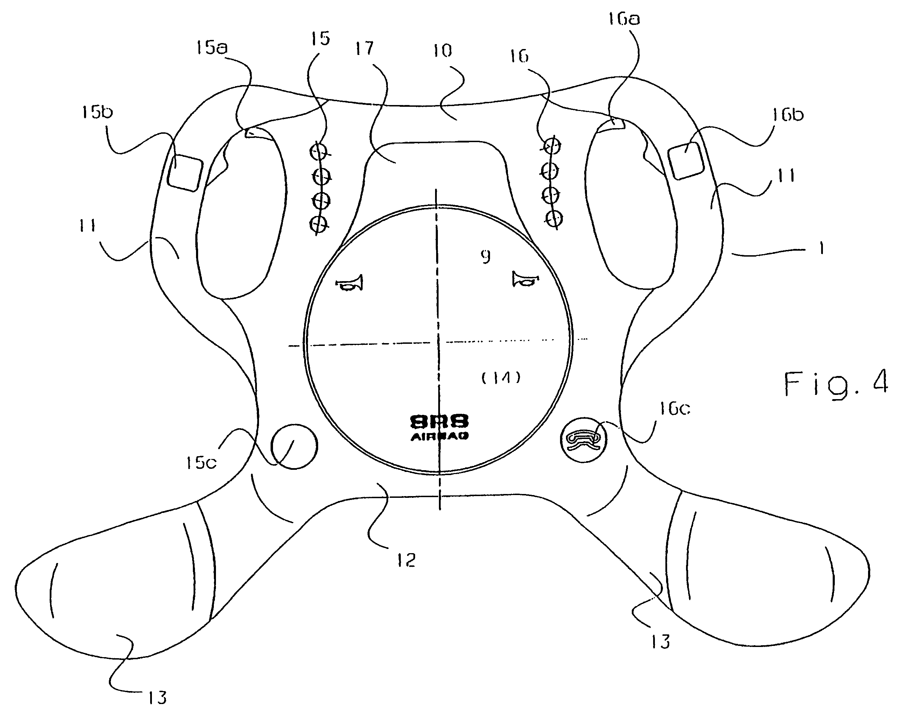

Bei der Ausführungsform gemäß Fig. 4 schließlich ist vorgesehen, daß das "Lenkrad" 1 nur noch sehr kleine Drehbewegungen im Bereich bis maximal ± 10 Winkelgrad ausführen kann, wobei es wiederum durch eine Rückstellfeder in die neutrale Mittellage zurückgestellt wird, sofern keine anderen äußeren Kräfte auf das "Lenkrad" 1 einwirken. Das "Lenkrad" 1 besteht wiederum aus einem Zentralteil 9, an dem im oberen Bereich 10 Griffösen 11 und im unteren Bereich 12 Armstützen 13 ausgebildet sind. Bei diesem "Lenkrad" 1 kann sich der Fahrer wie bei bestimmten Fahrradlenkerformen bequem abstützen, was bei längeren Fahrten der Ermüdung entgegenwirkt und eine besonders entspannte Sitzhaltung ermöglicht. Vornehmlich im Zentralteil 9 sind ein Airbag 14 und Betätigungs- und Anzeigevorrichtungen 15 bis 17 untergebracht. Im linken Teil des "Lenkrades". 1 ist beispielsweise eine Tastatur 15 für die Vorgabe einer bestimmten Fahrzeuggeschwindigkeit, ein Hebel 15a zur Betätigung der Fahrtrichtungsanzeige, ein Taster 15b zur Eingabe weiterer Befehle und ein weiterer Taster 15c zur Einstellung des Radios vorgesehen. Im rechten Teil ist eine Tastatur 16 zur Einstellung der Klimaanlage, ein Hebel 16a zur Betätigung der Fahrtrichtungsanzeige, ein Taster 16b zur Eingabe weiterer Befehle und ein Taster 16c zur Betätigung des Signalhorns vorgesehen. Alle Betätigungseinrichtungen liegen so, daß sie erreicht werden können, ohne daß die Hand vom "Lenkrad" 1 entfernt werden muß. Im oberen Bereich kann zwischen den Tastaturen 15 und 16 noch eine Anzeigevorrichtung in Form eines Multifunktionsdisplays angeordnet werden, über die den Fahrer zwangsläufig oder auf Abruf alle möglichen Informationen über das Fahrzeug optisch wahrnehmbar dargeboten werden können.

Da die Energie- und Datenübertragung zwischen der Fahrzeugkarosserie und dem nur um ± 30 Winkelgrad drehbaren "Lenkrad" keinerlei technische Schwierigkeiten bereitet, können selbstverständlich noch wesentlich mehr Anzeige- und Betätigungseinrichtungen am "Lenkrad" 1 untergebracht werden, ohne daß insoweit eine Überlastung zu befürchten wäre. Damit können nahezu alle für das Betreiben eines Fahrzeuges erforderlichen Betätigungseinrichtungen direkt am Lenkrad untergebracht werden, was erheblich zur Fahrsicherheit beiträgt, weil der Fahrer für diese Zwecke das Lenkrad nunmehr nicht mehr loslassen muß. Die Anordnung von Armstützen 13 zeigt weiterhin, daß das erfindungsgemäße "Lenkrad" auch ganz neue, bisher nicht mögliche Funktionen übernehmen kann.

Das gilt auch, wenn statt eines wegproportionalen Meßwertgebers ein kraftproportionaler Meßwertgeber verwendet wird.

## Patentansprüche

1. Lenkvorrichtung für ein Kraftfahrzeug mit einem Betätigungsorgan zur Einleitung der Lenkbewegung und einem Lenkgestänge zur Übertragung der Lenkbewegung auf die Räder, wobei das Betätigungsorgan aus einem Lenkrad (1) und einem Meßwertgeber (2) zur Erzeugung eines elektrischen oder elektronischen Positionssignals besteht, und das Lenkgestänge von einem Stellantrieb betätigt wird, der von einer elektrischen oder elektronischen Regeleinrichtung in Abhängigkeit von dem Positionssignal ansteuerbar ist, **dadurch gekennzeichnet, daß** das Lenkrad (1) drehbar auf einer Welle (1a) gelagert und gegen eine Rückstellfeder (3) um maximal ± 30 Winkelgrad aus der Mittellage drehbar ist.

2. Lenkvorrichtung nach Anspruch 1, **dadurch gekennzeichnet, daß** im Lenkrad (1) eine Anzeigevorrichtung (17) vorgesehen ist, die dem Fahrer die Position des Lenkrades (1) angibt.

3. Lenkvorrichtung nach Anspruch 1 oder 2, **dadurch gekennzeichnet, daß** das Positionssignal in der Regeleinrichtung derart verarbeitbar ist, daß der Ansteuerbefehl für den Stellantrieb in Abhängigkeit vom Lenkradeinschlag mehr oder weniger von einer direkt proportionalen Übersetzung abweicht.

4. Lenkvorrichtung für ein Kraftfahrzeug mit einem Betätigungsorgan zur Einleitung der Lenkbewegung und einem Lenkgestänge zur Übertragung der Lenkbewegung auf die Räder, wobei das Betätigungsorgan aus einem Lenkrad (1) und einem Meßwertgeber (2) besteht, und das Lenkgestänge von einem Stellantrieb betätigt wird, der von einer elektrischen oder elektronischen Regeleinrichtung in Abhängigkeit von dem Positionssignal ansteuerbar ist, **dadurch gekennzeichnet, daß** der Meßwertgeber (2) ein Signal erzeugt, das der Kraft proportional ist, die zum Drehen des Lenkrades (1) in eine von der Nullage abweichende Winkellage erforderlich ist und daß das Lenkrad (1) drehbar auf einer Welle (1a) gelagert und gegen eine Rückstellfeder (3) um maximal ± 30 Winkelgrad aus der Mittellage drehbar ist.

5. Lenkvorrichtung nach einem der vorhergehenden Ansprüche, **dadurch gekennzeichnet, daß** das Lenkrad (1) aus einem oberen Lenkradkranzteil (4) und zwei Lenkradspeichen (5) besteht, die außen mit den Enden des Lenkradkranzteils (4) verbunden sind.

6. Lenkvorrichtung nach Anspruch 5, **dadurch gekennzeichnet, daß** der obere Lenkradkranzteil (4) im mittleren Bereich (8) mit einem Zentralteil (6) des Lenkrades (1) verbunden ist, und daß am Lenkradkranzteil (4) rechts und links vom mittleren Bereich je ein mindestens handbreiter Griffbereich (7) ausgebildet ist.

7. Lenkvorrichtung nach einem der Ansprüche 1 bis 4, **dadurch gekennzeichnet, daß** das Lenkrad (1) aus vier Speichen (5a) und zwei kurzen Lenkradkranzteilen (4a) besteht, die endseitig mit den äußeren Enden der Speichen (5a) verbunden sind und je einen mindestens handbreiten Griffbereich (7a) bilden.

8. Lenkvorrichtung nach Anspruch 7, **dadurch gekennzeichnet, daß** die Speichen (5a) von einem Zentralteil (6a) des Lenkrades (1) ausgehen.

9. Lenkvorrichtung für ein Kraftfahrzeug mit einem Betätigungsorgan zur Einleitung der Lenkbewegung und einem Lenkgestänge zur Übertragung der Lenkbewegung auf die Räder, wobei das Betätigungsorgan aus einem Lenkrad (1) und einem Meßwertgeber (2) zur Erzeugung eines elektrischen oder elektronischen Positionssignals besteht, und das Lenkgestänge von einem Stellantrieb betätigt wird, der von einer elektrischen oder elektronischen Regeleinrichtung in Abhängigkeit von dem Positionssignal ansteuerbar ist, **dadurch gekennzeichnet, daß** das Lenkrad (1) drehbar auf einer Welle (1a) gelagert und gegen eine Rückstellfeder (3) um maximal ± 10 Winkelgrad aus der Mittellage drehbar ist.

10. Lenkvorrichtung nach Anspruch 9, **dadurch gekennzeichnet, daß** das Lenkrad (1) aus einem Zentralteil (9) besteht, an dem im oberen Bereich (10) Griffösen (11) und im unteren Bereich (12) Armstützen (13) ausgebildet sind.

11. Lenkvorrichtung nach Anspruch 10, **dadurch gekennzeichnet, daß** die Griffösen (11) und die Armstützen (13) einstückig mit dem Zentralteil (9) ausgebildet sind.

12. Lenkvorrichtung nach einem der Ansprüche 1 bis 3, **dadurch gekennzeichnet, daß** im Lenkrad (1), insbesondere im Zentralteil (9), ein Airbag (14) und Betätigungs- und Anzeigevorrichtungen (15 bis 17) untergebracht sind.

13. Lenkvorrichtung nach einem der Ansprüche 1 bis 3, **dadurch gekennzeichnet, daß** Betätigungsvorrichtungen (15, 16) außerdem im Griffbereich (7) bzw. im Bereich der Griffösen (11) angeordnet sind.

14. Lenkvorrichtung nach einem der Ansprüche 1 bis 3, **dadurch gekennzeichnet, daß** der Meßwertgeber (2) ein Wegsensor ist.

15. Lenkvorrichtung nach einem der Ansprüche 1 bis 3, **dadurch gekennzeichnet, daß** die Armstützen (13) aus einer gasdichten Umhüllung mit einer Füllung aus pulver-, kugel-, oder granulatförmigen Partikeln besteht, wobei die Füllung in Gegenwart eines Gases formbar ist, nach Evakuierung der Umhüllung die eingenommene Form aber dauerhaft beibehält.

## Claims

1. A steering device for a motor vehicle with an actuating member to initiate the steering movement and with a steering linkage to transfer the steering movement to the wheels, the actuating member consisting of a steering wheel (1) and of a measured value transmitter (2) to generate an electrical or electronic position signal, and the steering linkage being actuated by an actuating drive which is adapted to be driven by an electrical or electronic control device in response to the position signal, **characterized in that** the steering wheel (1) is rotatably mounted on a shaft (1a) and is rotatable against a restoring spring (3) through a maximum of ± 30 degrees of angle from the central position.

2. The steering device according to claim 1, **characterized in that** in the steering wheel (1) a display device (17) is provided, which indicates to the driver the position of the steering wheel (1).

3. The steering device according to claim 1 or 2, **characterized in that** the position signal is processable in the closed-loop control device such that the driving command for the actuating drive deviates to a greater or lesser extent from a directly proportional transmission as a function of the steering wheel turning angle.

4. A steering device for a motor vehicle with an actuating member to initiate the steering movement and with a steering linkage to transfer the steering movement to the wheels, the actuating member consisting of a steering wheel (1) and of a measured value transmitter (2), and the steering linkage being actuated by an actuating drive which is adapted to be driven by an electrical or electronic control device in response to the position signal, **characterized in that** the measured value transmitter (2) generates a signal which is proportional to the force necessary to turn the steering wheel (1) into an angular position deviating from the zero position, and that the steering wheel (1) is rotatably mounted on a shaft (1a) and is rotatable against a restoring spring (3) through a maximum of ± 30 degrees of angle from the central position.

5. The steering device according to any of the preceding claims, **characterized in that** the steering wheel (1) consists of an upper steering wheel rim piece (4) and two steering wheel spokes (5) which are connected externally with the ends of the steering wheel rim piece (4).

6. The steering device according to claim 5, **characterized in that** the upper steering wheel rim piece (4) is connected in the middle region (8) with a central part (6) of the steering wheel (1), and that to the right and left of the middle region one grip region (7) each of at least a hand's width is constructed on the steering wheel rim piece (4).

7. The steering device according to any of claims 1 to 4, **characterized in that** the steering wheel (1) consists of four spokes (5a) and two short steering wheel rim pieces (4a), which are connected at the end with the outer ends of the spokes (5a) and each form a grip region (7a) of at least a hand's width.

8. The steering device according to claim 7, **characterized in that** the spokes (5a) extend from a central part (6a) of the steering wheel (1).

9. A steering device for a motor vehicle with an actuating member to initiate the steering movement and with a steering linkage to transfer the steering movement to the wheels, the actuating member consisting of a steering wheel (1) and of a measured value transmitter (2) to generate an electrical or electronic position signal, and the steering linkage being actuated by an actuating drive which is adapted to be driven by an electrical or electronic control device in response to the position signal, **characterized in that** the steering wheel (1) is rotatably mounted on a shaft (1a) and is rotatable against a restoring spring (3) through a maximum of ± 10 degrees of angle from the central position.

10. The steering device according to claim 9, **characterized in that** the steering wheel (1) consists of a central part (9), on which grip lugs (11) are constructed in the upper region (10) and armrests (13) are constructed in the lower region (12).

11. The steering device according to claim 10, **characterized in that** the grip lugs (11) and the armrests (13) are constructed in one piece with the central part (9).

12. The steering device according to any of claims 1 to 3, **characterized in that** in the steering wheel (1), in particular in the central part (9), an airbag (14) and actuating and display devices (15 to 17) are accommodated.

13. The steering device according to any of claims 1 to 3, **characterized in that** actuating devices (15, 16) are additionally arranged in the grip region (7) and/or in the region of the grip lugs (11).

14. The steering device according to any of claims 1 to 3, **characterized in that** the measured value transmitter (2) is a path sensor.

15. The steering device according to any of claims 1 to 3, **characterized in that** the armrests (13) consist of a gas-tight covering with a filling of particles in powder, spherical or granulate form, the filling being formable in the presence of a gas, but after evacuation of the covering permanently maintaining the shape assumed.

## Revendications

1. Dispositif de direction pour un véhicule automobile, comportant un organe d'actionnement pour initier un mouvement de direction et une tringlerie de direction pour transmettre le mouvement de direction aux roues, l'organe d'actionnement étant constitué par un volant de direction (1) et un capteur de mesure (2) pour engendrer un signal de position électrique ou électronique, et la tringlerie de direction étant actionnée par un mécanisme de positionnement (commande) qui peut être piloté par un système de réglage électrique ou électronique en fonction du signal de position, **caractérisé en ce que** le volant (1) est monté rotatif sur un arbre (1a) et peut tourner à l'encontre d'un ressort de rappel (3), de la valeur maximale de ± 30 degrés d'angle depuis la position médiane.

2. Dispositif de direction selon la revendication 1, **caractérisé en ce que** dans le volant (1) est prévu un dispositif d'affichage (17) qui indique au conducteur la position du volant (1).

3. Dispositif de direction selon la revendication 1 ou 2, **caractérisé en ce que** le signal de position peut être traité dans le système de réglage de telle façon que l'ordre de pilotage pour le mécanisme de positionnement diverge plus ou moins d'une transmission directement proportionnelle en fonction de l'angle de rotation du volant.

4. Dispositif de direction pour un véhicule automobile, comportant un organe d'actionnement pour initier un mouvement de direction et une tringlerie de direction pour transmettre le mouvement de direction aux roues, l'organe d'actionnement étant constitué par un volant de direction (1) et un capteur de mesure (2), et la tringlerie de direction étant actionnée par un mécanisme de positionnement (commande) qui peut être piloté par un système de réglage électrique ou électronique en fonction du signal de position, **caractérisé en ce que** le capteur de mesure (2) engendre un signal qui est proportionnel à la force qui est nécessaire pour faire tourner le volant (1) jusque dans une position angulaire divergeant de la position zéro, et **en ce que** le volant (1) est monté rotatif sur un arbre (1a) et peut tourner à l'encontre d'un ressort de rappel (3), de la valeur maximale de ± 30 degrés d'angle depuis la position médiane.

5. Dispositif de direction selon l'une des revendications précédentes, **caractérisé en ce que** le volant (1) est constitué par une partie supérieure de couronne de volant (4) et par deux rayons de volant (50) qui sont reliés à l'extérieure aux extrémité de la partie de couronne de volant (4).

6. Dispositif de direction selon la revendication 5,**caractérisé en ce que** la partie supérieure de couronne de volant (4) est reliée dans la région médiane (8) avec une partie centrale (6) du volant (1), et **en ce qu'**une région de préhension (7) respective d'au moins une largeur de main est réalisée sur la partie de couronne de volant (4) à gauche et à droite de la région médiane.

7. Dispositif de direction selon l'une des revendications 1 à 4, **caractérisé en ce que** le volant (1) est constitué par quatre rayons (5a) et deux courtes parties de couronne de volant (4a) qui sont reliées, aux extrémités, avec les extrémités extérieures des rayons (5a) et qui forment chacune une région de préhension (7a) d'au moins une largeur de main.

8. Dispositif de direction selon la revendication 7, **caractérisé en ce que** les rayons (5a) partent d'une partie centrale (6a) du volant (1).

9. Dispositif de direction pour un véhicule automobile, comportant un organe d'actionnement pour initier un mouvement de direction et une tringlerie de direction pour transmettre le mouvement de direction aux roues, l'organe d'actionnement étant constitué par un volant de direction (1) et un capteur de mesure (2), et la tringlerie de direction étant actionnée par un mécanisme de positionnement (commande) qui peut être piloté par un système de réglage électrique ou électronique en fonction du signal de position, **caractérisé en ce que** le volant (1) est monté rotatif sur un arbre (1a) et peut tourner à l'encontre d'un ressort de rappel (3), de la valeur maximale de ± 10 degrés d'angle depuis la position médiane.

10. Dispositif de direction selon la revendication 9, **caractérisé en ce que** le volant (1) est constitué par une partie centrale (9) sur laquelle des oeillets de préhension (11) sont réalisés dans la partie supérieure (10) et des repose-bras (13) sont réalisés dans la région inférieure (12).

11. Dispositif de direction selon la revendication 10, **caractérisé en ce que** les oeillets de préhension (11) et les repose-bras (13) sont réalisés d'un seul tenant avec la partie centrale (9).

12. Dispositif de direction selon l'une des revendications 1 à 3, **caractérisé en ce que** dans le volant (1), en particulier dans la partie centrale (9), sont logés un airbag (14) et des dispositifs d'actionnement et d'affichage (15 à 17).

13. Dispositif de direction selon l'une des revendications 1 à 3, **caractérisé en ce que** des dispositifs d'actionnement (15, 16) sont en outre agencés dans la région de préhension (7) ou dans la région des oeillets de préhension (11), respectivement.

14. Dispositif de direction selon l'une des revendications 1 à 3, **caractérisé en ce que** le capteur de mesure (2) est un détecteur de course.

15. Dispositif de direction selon l'une des revendications 1 à 3, **caractérisé en ce que** les repose-bras (13) sont constitués par une enveloppe étanche au gaz avec un remplissage de particules sous forme de poudre, de billes ou de granulat, le remplissage étant façonnable en présence d'un gaz mais gardant de manière durable la forme adoptée après l'évacuation de l'enveloppe.
